# EUROPEAN PATENT APPLICATION

(11) **EP 4 787 222 A1**
(43) Date of publication of application: **05.08.2026**
(21) Application number: 25154668.5
(22) Date of filing: 29.01.2025
(51) Int. Cl.: G06F 40/30

(54) **ARTIFICIAL INTELLIGENCE AGENT FOR GENERATING RESPONSES TO STATEMENTS**

(71) Applicant: Koninklijke Philips N.V., 5656 AE Eindhoven (NL)
(72) Inventor: BULUT, Murtaza, Eindhoven (NL); EISENHARDT, Marc, Eindhoven (NL)
(74) Representative: Philips Intellectual Property & Standards

(57) **Abstract**

A computer-implemented method of generating responses, e.g. answering questions, using an artificial intelligence, Al, agent, is provided. The method includes receiving a plurality of consecutive statements; and invoking the AI agent to generate, and to output, responses corresponding to the statements. For at least one of the statements, the invoking comprises: combining the statement with one or more earlier statements to provide a combined statement; and generating, and outputting, a response to the combined statement. The generating of the response to the combined statement is performed concurrently with the generating of the response to at least one of the one or more earlier statements.

## Description

### TECHNICAL FIELD

The present disclosure relates to an artificial intelligence, AI, agent for generating responses to statements, e.g. answering questions. A computer-implemented method, a computer program product, and a system, are disclosed.

### BACKGROUND

Artificial intelligence "AI" agents, e.g. Generative Artificial Intelligence "GenAI" chatbots such as ChatGPT, are often used to generate responses, e.g. to answer questions. For instance, in the healthcare field, GenAI chatbots are starting to be used to answer questions relating to the manuals of medical devices. Such manuals are also known as Instructions For Use "IFU". The manuals may relate to any medical device, for instance, they may relate to a patient monitoring device, a medical imaging system such as an ultrasound imaging, a medical tool, and so forth. The AI agents used in such applications may employ a variety of architectures. They may be based on a so-called large language model "LLM", for example. In some chatbots, a technique known as Retrieval Augmented Generation "RAG" is used in combination with an LLM in order to optimize its output.

However, a drawback of existing AI agents is that after a statement has been inputted into the AI agent, e.g. question has been inputted into the AI agent, it is not possible for the AI agent to process a new statement, e.g. a new question, until the response, e.g. answer, to the previous statement, e.g. question, has been generated. This is problematic because a user is unable to change, or improve, their statement, e.g. question, until the response, e.g. answer, to their previous statement, e.g. question, has been generated. This can take some tens of seconds, or even minutes, and therefore leads to delays. Such delays may be unacceptable in time-critical settings such as in healthcare settings.

### SUMMARY

According to one aspect of the present disclosure, a computer-implemented method of generating responses using an artificial intelligence, AI, agent, is provided. The method includes:
receiving a plurality of consecutive statements; and
invoking the AI agent to generate, and to output, responses corresponding to the statements; and
wherein for at least one of the statements, the invoking comprises:
   combining the statement with one or more earlier statements to provide a combined statement; and
   generating, and outputting, a response to the combined statement; and
   wherein the generating of the response to the combined statement is performed concurrently with the generating of the response to at least one of the one or more earlier statements.

In the above method, the combining of the statement with one or more earlier statements provides a combined statement that is more-specific to an issue that is the subject of the statements. Invoking the AI agent to generate a response to the combined statement enables the AI agent to generate a response that has greater relevance to the issue. Moreover, since the generating of the response to the combined statement is performed concurrently with the generating of the response to at least one of the one or more earlier statements, the more-relevant response to the issue is provided more quickly. Thus, the proposed AI agent facilitates a more efficient way of generating responses to statements.

The response(s) may be outputted in various ways, such as to a display device, or to a virtual/ augmented reality display device, or to a printer, or to a processor, or to a computer-readable storage medium, or to the Internet, or to the Cloud, and so forth. The response(s) may be outputted as they become available. The response(s) may also be positioned, or ordered, on the display device in various ways. For instance, a response to a combined statement can be shown above a response to another statement.

The statements may in general represent any type of information. In an example, the statement(s) represents question(s). In another example, the statement(s) represents information relating to the question(s). In these examples, the corresponding responses are answers. The statements may be received in various forms, such as in the form of text, images, graphs, and so forth. The responses may likewise be provided in similar forms.

In an example, the operation of invoking the AI agent comprises inputting the statement, or inputting a summary of the statement, into the AI agent. The summary may represent a core of the corresponding statement, or a focus of the corresponding statement, or in other words, a condensed statement, or a more-targeted statement, or a more-specific statement. As compared to inputting the statement into the AI agent, inputting the summary of the statement into the AI agent may facilitate the AI agent to obtain a response in a shorter time, or with lower computational power, or to generate a response with greater relevance. The summary of the statement may be obtained in various ways. For instance, the statement may be inputted into an LLM together with the instruction to provide a summary of the statement. Alternatively, various natural language processing "NLP" techniques may be used to provide a summary. The statement, or the summary of the statement, may be inputted into a prompt of the AI agent. Various keyword extraction techniques may also be used to generate the summary of the statement.

In an example, the AI agent includes a plurality of LLMs. In this example, the combined statement, and the one or more earlier statements, or summaries thereof, are inputted into different LLMs. Inputting the statements into different LLMs facilitates the generating of the response to the combined statement to be performed concurrently with the generating of the response(s) to the earlier statements.

In an example, the operation of combining the statement with one or more earlier statements to provide a combined statement, comprises concatenating the statement and the one or more earlier statements to provide the combined statement. Concatenating the statements provides a straightforward manner of combining the statements. This may be advantageous in situations in which the statements are clear and concise, and in which a further step of summarizing the statement would consume more processing time than is saved by inputting the statement itself into the AI agent. In another example, the operation of combining the statement with one or more earlier statements to provide a combined statement, may be performed by inputting the statements into the prompt input of an LLM, together with the instruction to combine the statements.

In an example, the operation of combining the statement with one or more earlier statements to provide a combined statement, comprises combining the statement with the one or more earlier statements and at least one response to at least one of the one or more earlier statements, to provide the combined statement. In this example, the response to at least one of the one or more earlier statements is therefore also used to generate the response to the combined statement. By taking account of the response(s) in this manner, the AI agent may generate a more relevant response to an issue that is the subject of the statements. This example may be used in situations in which there are three or more consecutive statements. For instance, within a series of three consecutive statements, one of the first two statements may be a specific statement for which a response has already been generated before the third statement is received. The response to the specific statement may then be combined, together with its corresponding statement, and also the other earlier statement for which a response is still being generated, and also the third statement, to provide the combined statement.

In an example, the operation of outputting the responses corresponding to the statements comprises outputting, to a display device, pairs of statements and corresponding responses. Thus, the combined statement, and the corresponding response to the combined statement, may be outputted in a pair, and an earlier statement and its corresponding response may be outputted in a pair. The pairs may be identified in various ways on the display device. For instance they may be outputted in positions that are adjacent one another, or they may be color coded, or they may be outputted to a common zone of the display device.

According to another aspect of the present disclosure, the computer-implemented method of generating responses using an AI agent includes:
generating, in response to the receiving of at least one of the received statements, information for obtaining from the AI agent a further response to the received statement; and
outputting the information.

In this aspect, the information that is generated may be used to obtain a further response, e.g. an improved response, to the received statement. The information may guide a user, or a processing device, to obtain a further response to the received statement, for example. Examples of this information include messages to help teach a user how to use the AI agent more effectively, e.g. how to generate responses more quickly. For instance, if a user poses a broad statement, the message can teach the user to ask a more specific statement, and can give an example of such a statement. The generation of the information may be triggered based on various criteria, such as based on an assessment that a statement is broad, or vague. This assessment may be performed in various ways. For instance, an assessment that a statement is broad may be derived using an LLM, or based on the internal processing that takes place when generating its response. For example, if the response is not immediately available, or if a deeper search needs to be performed, or if too many potential responses are generated, it may be determined that the statement is broad.

In an example, the outputting of the information is performed prior to the outputting of the response corresponding to the received statement. In this example, the information may therefore be used to guide a user, or a processing device, to improving their subsequent statement. As mentioned above, it can take some tens of seconds, or even minutes, to generate a response to a statement using an AI agent. Therefore by using the time period between the receiving of a statement and the outputting of its response to output this information, this example makes more efficient use time. This may be useful in a healthcare context in which clinicians are often short of time.

In an example, the outputting of the information is performed during the generating of the response corresponding to the received statement. Thus, in this example, the information may be used to guide a user to improving their subsequent statement. This example also makes more efficient use of a user's time.

In an example, the generating the information comprises inputting the received statement into a machine learning model and generating the information in response to the inputting. The machine learning model is trained to generate the information using training data comprising a plurality of instances of statements and corresponding information.

In an example, the information is configured to one or more of: i) provide optimal use of the AI agent, ii) assist in identifying a potential error in the received statement, and iii) guide the user to identifying a potential hallucination in the response to the received statement.

In an example, the method of generating responses using an AI agent includes generating, in response to the received statement, additional information relating to the statement, or to the upcoming response; and outputting the additional information. The additional information may relate to a subject of the statement, such as a medical device, for example.

In an example, the generating of the information, is performed based further on one or more of: i) a type of data processing operation used by the AI agent to generate the response corresponding to the received statement; ii) a history of earlier received statements and corresponding responses.

In an example, the plurality of consecutive statements relate to a functioning of a technical system, such as a patient monitoring device, or an electronic medical records system. Thus, the AI agent may be used to obtain responses in the form of technical information.

According to another aspect of the present disclosure, a computer program product, is provided. The computer program product includes instructions which when executed by one or more processors, cause the one or more processors to carry out a method of generating responses using an artificial intelligence, AI, agent. The method comprises:
receiving a plurality of consecutive statements; and
invoking the AI agent to generate, and to output, responses corresponding to the statements; and
wherein for at least one of the statements, the invoking comprises:
   combining the statement with one or more earlier statements to provide a combined statement; and
   generating, and outputting, a response to the combined statement; and
   wherein the generating of the response to the combined statement is performed concurrently with the generating of the response to at least one of the one or more earlier statements.

The computer program product provides advantages that correspond to those of the above-described computer-implemented method.

According to another aspect of the present disclosure, a system for generating responses using an artificial intelligence, AI, agent, is provided. The system comprises one or more processors configured to:
receive a plurality of consecutive statements; and
invoke the AI agent to generate, and to output, responses corresponding to the statements; and
wherein for at least one of the statements, the invoking comprises:
   combining the statement with one or more earlier statements to provide a combined statement; and
   generating, and outputting, a response to the combined statement; and
   wherein the generating of the response to the combined statement is performed concurrently with the generating of the response to at least one of the one or more earlier statements.

The system provides advantages that correspond to those of the above-described computer-implemented method.

Further aspects, features, and advantages of the present disclosure will become apparent from the following description of examples, which is made with reference to the accompanying drawings.

### BRIEF DESCRIPTION OF THE DRAWINGS

Fig. 1 is a schematic diagram illustrating an example of a prior art method of answering questions using an artificial intelligence agent.
Fig. 2 is a schematic diagram illustrating an example of a method of answering questions using an artificial intelligence agent, in accordance with some aspects of the present disclosure.
Fig. 3 is a schematic diagram illustrating an example of a method of answering multiple questions using an artificial intelligence agent, in accordance with some aspects of the present disclosure.
Fig. 4 is a schematic diagram illustrating a second example of a method of answering multiple questions using an artificial intelligence agent, in accordance with some aspects of the present disclosure.
Fig. 5 is a schematic diagram illustrating a third example of a method of answering multiple questions using an artificial intelligence agent, in accordance with some aspects of the present disclosure.
Fig. 6 is a schematic diagram illustrating a fourth example of a method of answering multiple questions using an artificial intelligence agent, in accordance with some aspects of the present disclosure.
Fig. 7 is a schematic diagram illustrating an example of the outputting of information for obtaining from the AI agent a further answer to the received question, prior to the outputting of the answer corresponding to the received question, in accordance with some aspects of the present disclosure.
Fig. 8 is a schematic diagram illustrating a first example of the generation of information for obtaining from the AI agent a further answer to the received question, prior to the outputting of the answer corresponding to the received question, in accordance with some aspects of the present disclosure.
Fig. 9 is a schematic diagram illustrating a second example of the generation of information for obtaining from the AI agent a further answer to the received question, prior to the outputting of the answer corresponding to the received question, in accordance with some aspects of the present disclosure.
Fig. 10 is a schematic diagram illustrating a third example of the generation of information for obtaining from the AI agent a further answer to the received question, prior to the outputting of the answer corresponding to the received question, in accordance with some aspects of the present disclosure.
Fig. 11 is a schematic diagram illustrating an example of a system for answering questions using an artificial intelligence agent, in accordance with some aspects of the present disclosure.

### DETAILED DESCRIPTION

Examples of the present disclosure are provided with reference to the following description and Figures. In this description, for the purposes of explanation, numerous specific details of certain examples are set forth. Reference in the specification to "an example", "an implementation" or similar language means that a feature, structure, or characteristic described in connection with the example is included in at least that one example. It is also to be appreciated that features described in relation to one example may also be used in another example, and that all features are not necessarily duplicated in each example for the sake of brevity. For instance, features described in relation to a computer-implemented method, may be implemented in a computer program product, and in a system, in a corresponding manner.

In the following description, reference is made to examples of a computer-implemented method of answering questions using an artificial intelligence, AI, agent. In some examples, reference is made to the use of the AI agent to generate answers to questions that relate to IFUs of a medical device. However, it is to be appreciated that the methods disclosed herein are not limited to use in this example application, and that the method may be used with an AI agent to generate answers to questions in general. Moreover, it is to be appreciated that whilst some examples refer to the use of the AI agent to answer questions, the use of the AI agent may be more general, and therefore the AI agent may also be used, more generally, to generate responses to statements, e.g. to retrieve information, to process information, to provide an opinion, and so forth. Even more generally, the AI agent may be used to generate responses to inputted data segments. The data segments may in general represent any type of information, e.g. text, images, graphs, and so forth.

It is noted that the computer-implemented methods disclosed herein may be provided as a non-transitory computer-readable storage medium including computer-readable instructions stored thereon, which, when executed by at least one processor, cause the at least one processor to perform the method. In other words, the computer-implemented methods may be implemented in a computer program product. The computer program product can be provided by dedicated hardware, or hardware capable of running the software in association with appropriate software. When provided by a processor, the functions of the method features can be provided by a single dedicated processor, or by a single shared processor, or by a plurality of individual processors, some of which can be shared. The functions of one or more of the method features may for instance be provided by processors that are shared within a networked processing architecture such as a client/server architecture, a peer-to-peer architecture, the Internet, or the Cloud.

The explicit use of the terms "processor" or "controller" should not be interpreted as exclusively referring to hardware capable of running software, and can implicitly include, but is not limited to, digital signal processor "DSP" hardware, read only memory "ROM" for storing software, random access memory "RAM", a non-volatile storage device, and the like. Furthermore, examples of the present disclosure can take the form of a computer program product accessible from a computer-usable storage medium, or a computer-readable storage medium, the computer program product providing program code for use by or in connection with a computer or any instruction execution system. For the purposes of this description, a computer-usable storage medium or a computer readable storage medium can be any apparatus that can comprise, store, communicate, propagate, or transport a program for use by or in connection with an instruction execution system, apparatus, or device. The medium can be an electronic, magnetic, optical, electromagnetic, infrared, or a semiconductor system or device or propagation medium. Examples of computer-readable media include semiconductor or solid-state memories, removable computer disks, random access memory "RAM", read-only memory "ROM", rigid magnetic disks and optical disks. Current examples of optical disks include compact disk-read only memory "CD-ROM", compact disk-read/write "CD-R/W", Blu-Ray^{™} and DVD.

It is also noted that some operations that are described as being performed in the computer-implemented methods disclosed herein may be implemented using artificial intelligence techniques. Suitable techniques may include machine learning techniques, deep learning techniques, and neural networks. For instance, one or more neural networks, may be trained in a supervised, or in some cases unsupervised, manner, to implement the operations performed in the computer-implemented methods disclosed herein.

As mentioned above, the present disclosure relates to generating responses, e.g. answering questions, using an artificial intelligence, AI, agent.

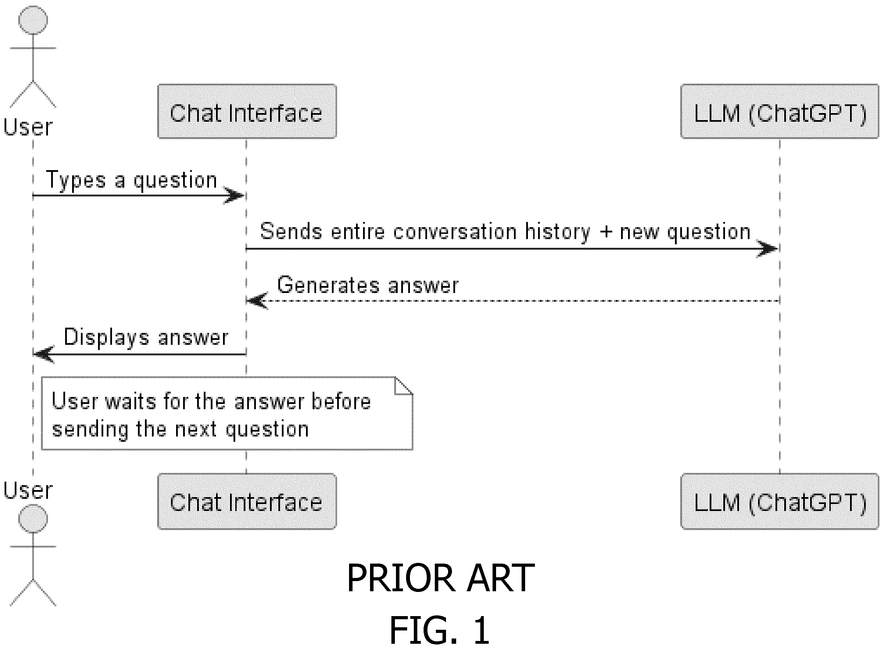

Fig. 1 is a schematic diagram illustrating an example of a prior art method of answering questions using an artificial intelligence agent. As illustrated in Fig. 1, a user poses a question. The Chat interface transmits the question, together with the conversation history (i.e. the history of previous related questions and corresponding answers) to an LLM, such as ChatGPT. This information may be referred to as the current conversation. The current conversation is inputted into the prompt of the LLM. The LLM processes the current conversation, which may take some seconds, or minutes, and, then returns a generated answer. The answer to the current conversation may be obtained by consulting a database of documents that relate to a subject of the questions. However, the LLM cannot process a further question during the period when an answer to the current question is being generated. This can delay the user in posing a further question, or in providing additional information relating to the earlier question.

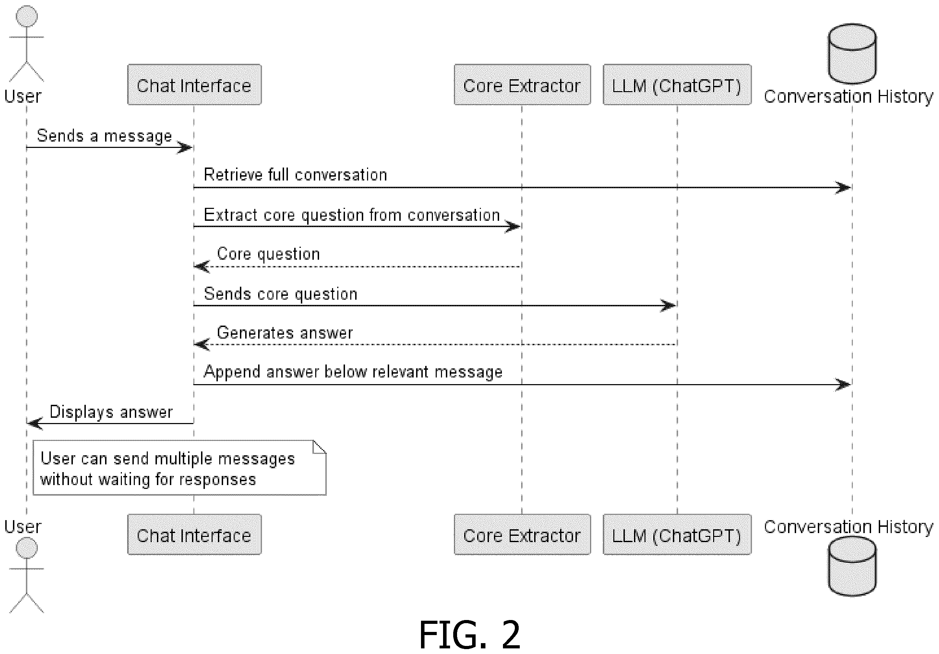

Fig. 2 is a schematic diagram illustrating an example of a method of answering questions using an artificial intelligence agent, in accordance with some aspects of the present disclosure. Fig. 2 illustrates the operation of the proposed AI agent when a new question in a series of related questions, is received. In the example illustrated in Fig. 2, when the new question is received, the conversation history is retrieved from a Conversation History Database. The conversation history may include one or more previous related questions, and optionally any answers that are already available for these previous related questions. The current conversation, i.e. the conversation history, together with the current question, is then inputted into a Core Question Extractor (e.g. an LLM) together with an instruction to extract a core question from the current conversation. Then, a parallel processing step is invoked wherein the core question is inputted into an LLM in order to generate a corresponding answer. The generation of the answer to the core question, occurs simultaneously with the generation of an answer to one or more of the previous questions in the conversation. Thus, the LLM that is generating an answer to the core question for the current conversation runs in parallel with the LLM that is generating an answer to at least one previous questions in the conversation history. After the answer to a core question has been generated, the corresponding answer is merged below the question from which the core question was extracted. With the system illustrated in Fig. 2, a user can pose a question at any point in time. A new question will again trigger Core Question Extractor to extract a core question from the most recent conversation.

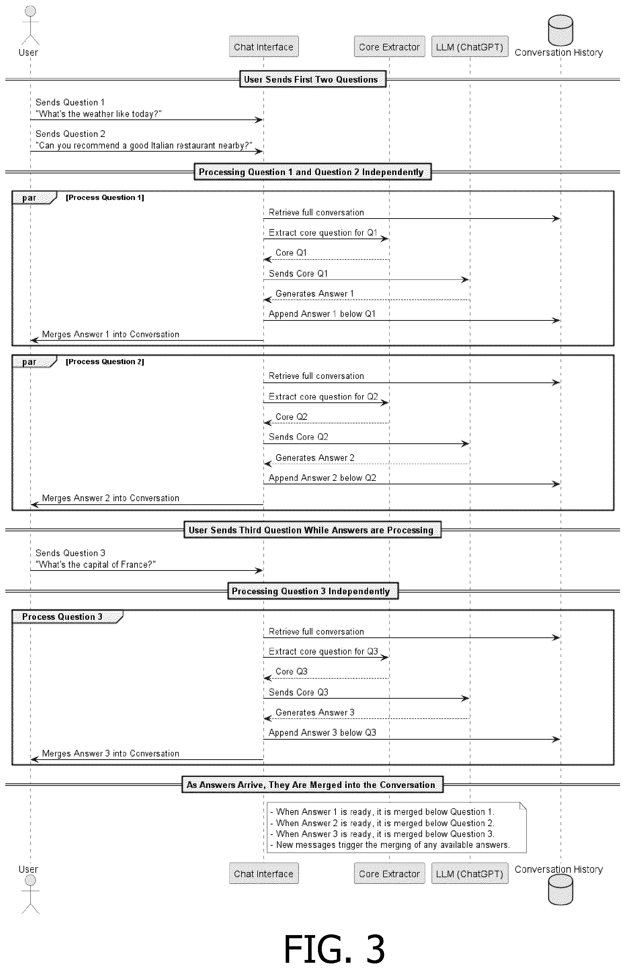

Fig. 3 is a schematic diagram illustrating an example of a method of answering multiple questions using an artificial intelligence agent, in accordance with some aspects of the present disclosure. Fig. 3 illustrates the operation of the proposed AI agent when multiple related questions are received. As illustrated in Fig. 3, when an new question is received, the new question, optionally together with the answers to any previous related questions that have been generated, and their corresponding questions, are merged into the current conversation. The current conversation is then inputted into the Core Extractor in order to extract the core question, and the core question is then transmitted to the LLM to generate a corresponding answer. The generation of the answer to the core question, occurs simultaneously with the generation of an answer to one or more of the previous questions in the conversation.

As the questions are received, the question may be labelled, e.g. by applying an index to the questions. This helps to keep track of the questions. Related questions may then be grouped into a conversation using their labels. When a core question is extracted, the index, or indices, for the corresponding questions relating to the core question, are stored. These labels provide a mapping between the answer to the core question, and the original questions.

Some further examples of the method of generating responses, e.g. answering questions, using an artificial intelligence, AI, agent, are described below.

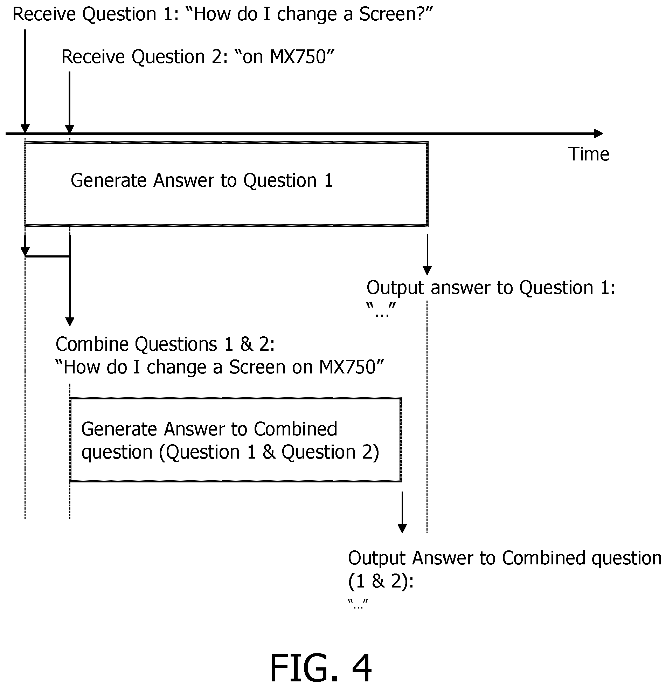

Fig. 4 is a schematic diagram illustrating a second example of a method of answering multiple questions using an artificial intelligence agent, in accordance with some aspects of the present disclosure. In the example illustrated in Fig. 4, a question, labelled as Question 1, is received. In this example, a user wishes to know how to change a screen of a patient monitoring device. An answer to Question 1 is then generated, and when this answer is available, the answer is outputted. The generation of the answer to Question 1 is performed by an LLM, as described above. However, the generation of the answer to Question 1 can take some time because the user has not specified the model number of the patient monitoring device to which their question relates, and the documents that the LLM uses to generate its answer cover a variety of different types of patient monitors. After Question 1 has been received, and before its answer is available, a further question, labelled as Question 2, is received. In this example, the user was triggered to further specify the model number of the patient monitor as MX750. Question 2 therefore relates to Question 1. The related questions, i.e. Question 1 and Question 2, are then combined to provide a combined question. This may be performed by concatenating Question 1 and Question 2. An answer to the combined question is then generated simultaneously with the generation of the answer to Question 1. The generation of the answer to the combined question is also performed by an LLM, as described above. Different LLMs are used to generate the answers to Question 1, and the combined question, and therefore the answers to these questions can be generated simultaneously. By the term generated simultaneously, it is meant that at least some of the processing that is used to generate the answer to Question 2 overlaps in time with the processing that is used to generate the answer to Question 1. Thus, the outputting of an answer to Question 2 may occur before, or simultaneously with, or after, the outputting of an answer to Question 1. In the example illustrated in Fig. 4, the outputting of the answer to the combined question occurs before the outputting of the answer to Question 1. This is because the additional information that is provided by Question 2, i.e. specification of the model number "MX750", enables the LLM to generate its answer more quickly.

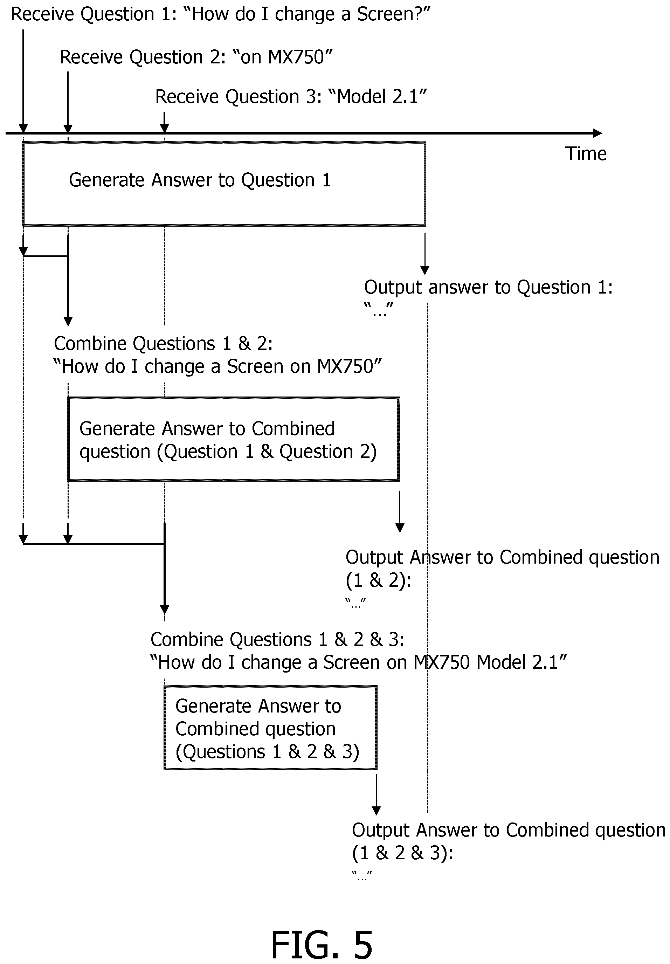

Fig. 5 is a schematic diagram illustrating a third example of a method of answering multiple questions using an artificial intelligence agent, in accordance with some aspects of the present disclosure. The example illustrated in Fig. 5, corresponds to the example illustrated in Fig. 4, except that an additional question, Question 3, is received after Question 2. In this example, Question 3, provides further detail on the model number. The example illustrated in Fig. 5 begins as described above with reference to Fig. 4. When Question 3 is received, Question 3 is combined with Question 1 and Question 2, to provide a further combined question. An answer to the further combined question is then generated simultaneously with the generation of the answer to Question 1. The generation of the answer to the further combined question is also performed by an LLM, as described above. Different LLMs are used to generate the answers to Question 1, the combined question, and the further combined question, and therefore the answers to these questions can be generated simultaneously. In the example illustrated in Fig. 5, the outputting of the answer to the further combined question occurs before the outputting of the answer to Question 1, and also before the outputting of the answer to the combined question. This is because the additional information that is provided by Question 3, i.e. further specification of the model number as "Model 2.1", enables the LLM to generate its answer more quickly.

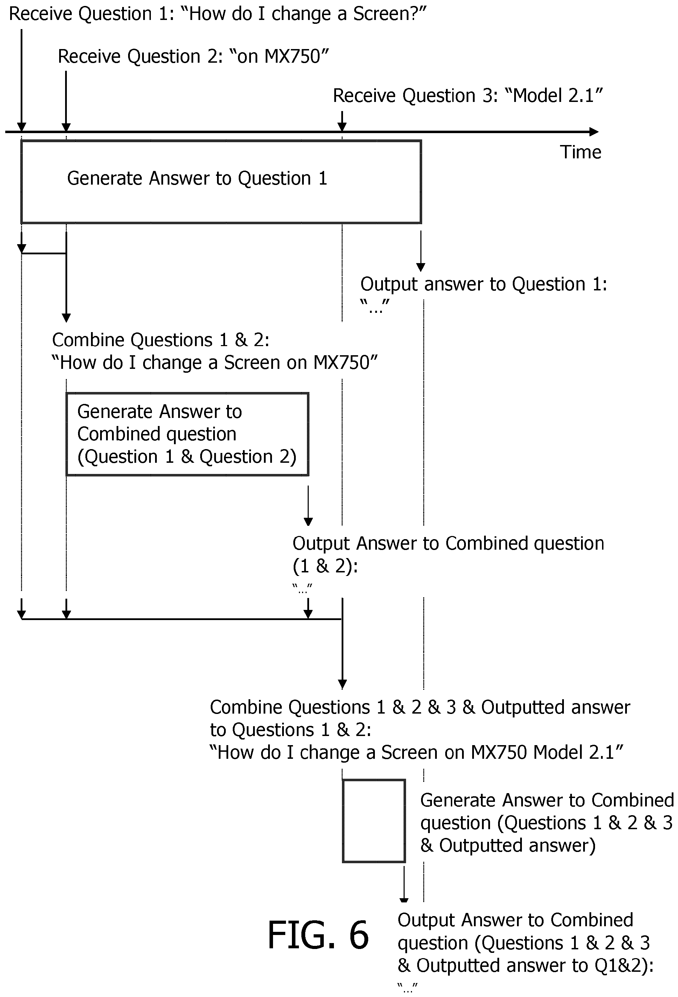

Fig. 6 is a schematic diagram illustrating a fourth example of a method of answering multiple questions using an artificial intelligence agent, in accordance with some aspects of the present disclosure. The example illustrated in Fig. 6, corresponds to the example illustrated in Fig. 5, except that in this example, an answer to the combined question (i.e. the combination of Question 1 and Question 2), is already available before Question 3, is received. In this example, the further combined question includes Question 1, Question 2, Question 3, and also the answer to the combination of Question 1 and Question 2. An answer to the further combined question is then generated simultaneously with the generation of the answer to Question 1. The generation of the answer to the further combined question is also performed by an LLM, as described above. Different LLMs are used to generate the answers to Question 1, and the further combined question, and therefore the answers to these questions can be generated simultaneously. The LLM that was used to answer the combined question, is again available for answering a further question because the answer to the combined question has been generated. In the example illustrated in Fig. 6, the outputting of the answer to the further combined question occurs before the outputting of the answer to Question 1. This is because the additional information that is provided by Question 2 and Question 3, i.e. further specification of the model number as "MX750" and "Model 2.1", enables the LLM to generate its answer more quickly.

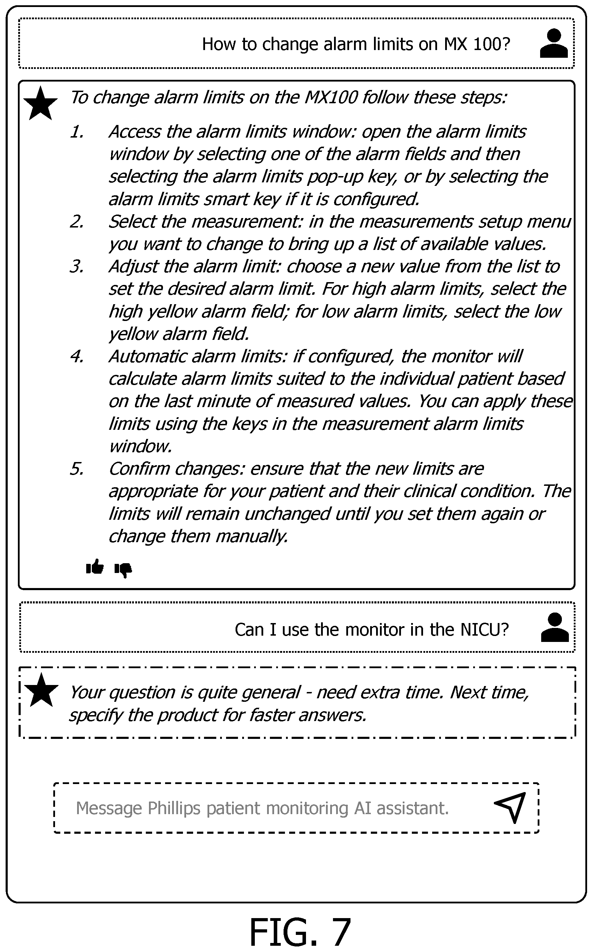

Fig. 7 is a schematic diagram illustrating an example of the outputting of information for obtaining from the AI agent a further answer to the received question, prior to the outputting of the answer corresponding to the received question, in accordance with some aspects of the present disclosure. As mentioned above, this information may be generated, and outputted, in response to the receiving of at least one of the received questions.

In the example illustrated in Fig. 7, a user has inputted the question "How to change alarm limits on MX 100?", as illustrated in the uppermost box in Fig. 7. The AI agent has generated the answer illustrated in the second box in Fig. 7. The user then inputs the question illustrated in the third box in Fig. 7, i.e. "Can I use the monitor in the NICU (Neonatal Intensive Care Unit)?". This question is vague and is likely to take the AI agent a long time to generate an answer. Thus in accordance with this example the following information is outputted in the fourth box illustrated in Fig. 7: "Your question is quite general - need extra time. Next time, specify the product for faster answers.". This information helps to teach the user how to formulate their next question so as to obtain a further answer, e.g. an improved answer. A user may then input a subsequent question in the fifth box illustrated in Fig. 7, and the submit the question by clicking on the arrow. Since the subsequent question is informed by the information that is provided in the fourth box illustrated in Fig. 7, an answer may be provided more quickly by the AI agent, or a more reliable answer may be provided by the AI agent.

The information for obtaining from the AI agent a further answer to the received question, may be triggered, and also generated, in various ways. For example, the information may be triggered depending on a mode of user interaction with the AI agent. The mode can be determined automatically based on context, e.g. a current action, a patient condition, a protocol, a time of the day, or it may be selected by the user. Some example modes are provided below. In general the goal of these modes may be to one or more of: decrease the time required to generate an answer from the AI agent, increase the usage frequency and duration of the special features of the AI agent, speed up the detection of potential mistakes.

In one example, an efficiency mode is provided wherein the AI agent aims to teach the user how to use the AI agent more efficiently, e.g. to reduce the amount of time it takes to generate an answer to a question. In this mode, a user's question, and the information indicates how the question can be improved so as to generate an answer more quickly. For instance, a machine learning algorithm, trained with questions and corresponding answers, may be used to generate recommendations as to how the question can be improved, e.g. by making it more concise. In another example, the time taken by the AI agent to generate an answer is measured, and when it is expected to exceed a threshold duration, a suggestion how to change or augment the question for faster answer generation can be given. In another example, the information may be used to guide the user to make better use the strengths of the AI agent. The AI agent might have features that the user is not aware of, e.g. the ability to extract images, tables, generate speech, and so forth. In this example the AI agent may generate information that advises the user how to make better use of such features. In another example, a user's questions and the AI agent's corresponding answers are compared to examples that make optimal use of the AI agent. Optimal use may be defined in terms of the number of computations, amount of memory required, number of tokens inputted and outputted, and latency, for example. If the comparison shows that additional functionalities are not used, the information can include recommendations on how a user's questions can be improved to make better use of the AI agent. In yet another example, the information may guide a user to identify potential inconsistencies, hallucinations, or mistakes in the answer. Due to the nature of LLMs, mistakes can be expected. The information that is provided by this example can therefore be used to guide a user to prevent, or spot, such errors. In this example, it may be known, e.g. from testing the AI agent, that specific types of questions are more prone to errors than others. When these, or similar, questions are posed by a user, the information can give examples of the types of errors that can be expected.

In another example, the information can guide a user to prevent or to identify potential hallucinations. For instance, it can be known from the architecture of the AI agent that certain types of internal computations, e.g. the triggering a specific module, process, mathematical computation, or a request for references, a generation of time-series data, etc., are linked to increased output mistakes, also known as hallucinations. Upon triggering of these computations or functions, the corresponding information can be outputted.

In another example, the information that is outputted can relate to a subject of the questions. For instance, the AI agent may receive information from other medical devices. The relevance of this information to the current subject can be determined, e.g. via natural language processing, and this information can be outputted. For instance, if the subject of a user's questions is the setting of an ECG alarm, the information that is outputted can relate to the current ECG alarm settings (received from a patient monitor). If the subject of the user's questions relates to medication for reducing blood pressure, the information can include information about a current medication used by the patient (received from the EMR), e.g. highlighting the potential drug-drug interactions.

Examples of the above-described information can be classified in terms of their urgency and triggered to be outputted depending on their urgency.

In one example, the outputting of the information is triggered based on a type of question that is posed by the user. In another example, the outputting of the information is triggered based on how a question is being processed. In another example, the outputting of the information is triggered based on how an answer is being generated. In another example, the outputting of the information is triggered based on a history of previous question-answer pairs. In another example, the outputting of the information is triggered based on a history of previously generated information. In another example, the outputting of the information is triggered based on the amount of time taken to generate an answer. Thus, if a threshold duration is exceeded, the information is displayed.

In one example, the amount of information that is outputted to be fitted to the expected time between the receiving of the question and the outputting of the corresponding answer.

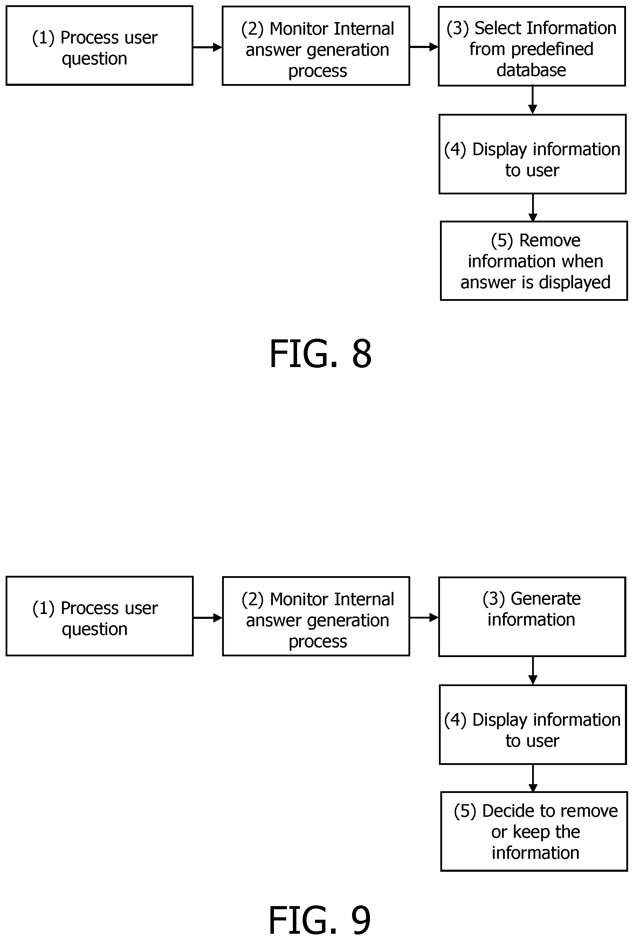

Various examples of the generation of information for obtaining a further answer from the AI agent, are illustrated in Fig. 8 - Fig. 10. In these examples, the generating of the information is performed using one or more of (i) a pre-determined set of messages, (ii) a template set of messages where required fields are completed based on the answer and processing, (iii) an LLM.

Fig. 8 is a schematic diagram illustrating a first example of the generation of information for obtaining from the AI agent a further answer to the received question, prior to the outputting of the answer corresponding to the received question, in accordance with some aspects of the present disclosure. In the example illustrated in Fig. 8, the information is generated based on computations performed by the AI agent during the generation of an answer. For example, if an answer is not immediately available, then the information may be obtained by selecting a message from a pre-defined set of messages. The messages may be targeted towards teaching the user how to use the AI agent more efficiently, as illustrated in Fig. 4.

Fig. 9 is a schematic diagram illustrating a second example of the generation of information for obtaining from the AI agent a further answer to the received question, prior to the outputting of the answer corresponding to the received question, in accordance with some aspects of the present disclosure. In the example illustrated in Fig. 9, the information is generated in real time. The generation of the information may be based on the computational analysis described above, and also the content of the received questions. For example, ground-truth information related to the user question can be shown. A decision to remove or keep the information may also be made dynamically, wherein it is determined according to the displayed answer. If the information is linked to an answer it is shown, otherwise it is removed.

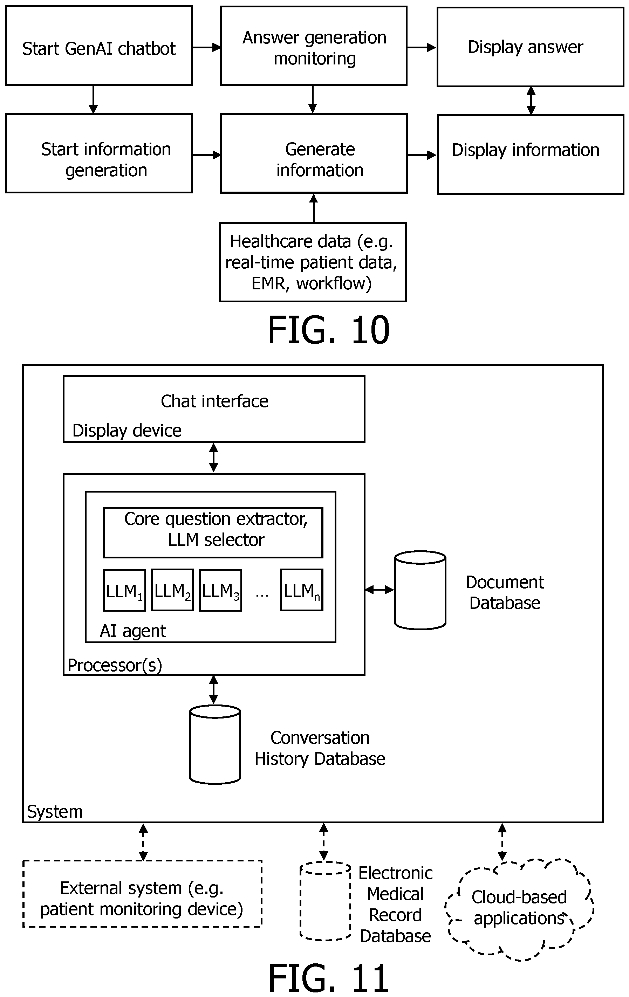

Fig. 10 is a schematic diagram illustrating a third example of the generation of information for obtaining from the AI agent a further answer to the received question, prior to the outputting of the answer corresponding to the received question, in accordance with some aspects of the present disclosure. The example illustrated in Fig. 10 shows the generation of the information in combination with the operation of the AI agent. In the example illustrated in Fig. 10, the information may be generated by an LLM. In the example illustrated in Fig. 10, the information that is generated may be determined based on data received from one or more other (medical) devices, systems, or (cloud-based) applications.

Fig. 11 is a schematic diagram illustrating an example of a system for answering questions using an artificial intelligence agent, in accordance with some aspects of the present disclosure. The system illustrated in Fig. 1 may be used to implement any of the methods described above. With reference to Fig. 11, the Chat interface may be provided on a display device such as a monitor, a tablet, a mobile communication device, and so forth. The display device may be associated with a medical device. For example, the display device may be a display device of a patient monitor. The input to the chat interface may include one or more of: text, image(s), speech, machine-readable code.

The above examples are to be understood as illustrative of the present disclosure, and not restrictive. Further examples are also contemplated. For instance, the examples described in relation to a computer-implemented method, may also be provided by the computer program product, or by the computer-readable storage medium, or by the system, in a corresponding manner. It is to be understood that a feature described in relation to any one example may be used alone, or in combination with other described features, and may be used in combination with one or more features of another of the examples, or a combination of other examples. Furthermore, equivalents and modifications not described above may also be employed without departing from the scope of the invention, which is defined in the accompanying claims. In the claims, the word "comprising" does not exclude other elements or operations, and the indefinite article "a" or "an" does not exclude a plurality. The mere fact that certain features are recited in mutually different dependent claims does not indicate that a combination of these features cannot be used to advantage. Any reference signs in the claims should not be construed as limiting their scope.

## Claims

1. A computer-implemented method of generating responses using an artificial intelligence, AI, agent, the method comprising:
receiving a plurality of consecutive statements; and
invoking the AI agent to generate, and to output, responses corresponding to the statements; and
wherein for at least one of the statements, the invoking comprises:
combining the statement with one or more earlier statements to provide a combined statement; and
generating, and outputting, a response to the combined statement; and
wherein the generating of the response to the combined statement is performed concurrently with the generating of the response to at least one of the one or more earlier statements.

2. The computer-implemented method according to claim 1, wherein the invoking comprises inputting the statement, or inputting a summary of the statement, into the AI agent.

3. The computer-implemented method according to any previous claim, wherein the combining comprises concatenating the statement and the one or more earlier statements, to provide the combined statement; and/or
inputting the statement and the one or more earlier statements into a prompt input of an LLM, together with the instruction to combine the statements.

4. The computer-implemented method according to any previous claim, wherein the combining comprises combining the statement with the one or more earlier statements and at least one response to at least one of the one or more earlier statements, to provide the combined statement.

5. The computer-implemented method according to any previous claim, wherein the outputting comprises outputting, to a display device, pairs of statements and corresponding responses.

6. The computer-implemented method according to any previous claim, wherein the method further comprises:
generating, in response to the receiving of at least one of the received statements, information for obtaining from the AI agent a further response to the received statement; and
outputting the information.

7. The computer-implemented method according to claim 6, wherein the outputting of the information is performed prior to the outputting of the response corresponding to the received statement.

8. The computer-implemented method according to claim 6 or claim 7, wherein the outputting of the information is performed during the generating of the response corresponding to the received statement.

9. The computer-implemented method according to any one of claims 6-8, wherein the generating the information comprises inputting the received statement into a machine learning model; and generating the information in response to the inputting; and
wherein the machine learning model is trained to generate the information using training data comprising a plurality of instances of statements and corresponding information.

10. The computer-implemented method according to any one of claims 6-9, wherein the information is configured to one or more of: i) provide optimal use of the AI agent, ii) assist in identifying a potential error in the received statement, and iii) guide the user to identifying a potential hallucination in the response to the received statement.

11. The computer-implemented method according to any one of claims 6 - 10, wherein the method further comprises generating, in response to the received statement, additional information relating to the statement, or to the upcoming response; and
outputting the additional information.

12. The computer-implemented method according to any one of claims 6 - 11, wherein the generating of the information, is performed based further on one or more of: i) a type of data processing operation used by the AI agent to generate the response corresponding to the received statement; ii) a history of earlier received statements and corresponding responses.

13. The computer-implemented method according to any previous claim, wherein the statements relate to a functioning of a technical system, such as a patient monitoring device or an electronic medical records system.

14. A computer program product comprising instructions which when executed by one or more processors, cause the one or more processors to carry out the method according to any one of claims 1- 13.

15. A system for generating responses using an artificial intelligence, AI, agent, the system comprising one or more processors configured to:
receive a plurality of consecutive statements; and
invoke the AI agent to generate, and to output, responses corresponding to the statements; and
wherein for at least one of the statements, the invoking comprises:
combining the statement with one or more earlier statements to provide a combined statement; and
generating, and outputting, a response to the combined statement; and
wherein the generating of the response to the combined statement is performed concurrently with the generating of the response to at least one of the one or more earlier statements.
